# EUROPEAN PATENT SPECIFICATION

(11) **EP 1 335 861 B1**
(45) Date of publication and mention of the grant of the patent: **18.08.2004**
(21) Application number: 01978679.7
(22) Date of filing: 06.11.2001
(51) Int. Cl.: B65D 6/24, G06K 19/077

(54) **INTELLIGENT CONTAINER**
INTELLIGENTER BEHÄLTER
RECEPTACLE INTELLIGENT

(30) Priority: 09.11.2000 GB 0027371
(43) Date of publication of application: 20.08.2003
(73) Proprietor: Selwyn, Frederick Philip, Bude, Cornwall EX23 0NW (GB)
(72) Inventor: Selwyn, Frederick Philip, Bude, Cornwall EX23 0NW (GB)
(74) Representative: Craske, Stephen Allan
(86) International application number: PCT/GB2001/004922
(87) International publication number: WO 2002/038456

(56) References cited:
- WO-A-93/24381
- US-A- 5 898 370
- US-A- 5 969 606

## Description

### TECHNICAL FIELD OF THE INVENTION

This invention relates to containers for use in transporting items from one location to another.

### BACKGROUND

The delivery of goods is a necessary and growing aspect of modern life. Often, couriers are not able to deliver goods on the first visit due to the fact that nobody is available to receive them. The packaging for such goods is often made from non-durable materials such as cardboard and filled with shock-absorbing materials to protect the contents. The packaging is generally used once only and then disposed of.

Accurate data concerning the type and movement of goods is of considerable commercial value, e.g. for marketing and logistics.

Often it is necessary to ensure that the goods are not subject to tampering in transit. It has been proposed in US 5 898 370 to provide a frangible radio security tag which is rendered inoperative if the container has been tampered with, but the level of security offered by such a tag is limited.

The present invention seeks to provide a new and inventive form of reusable container which can be delivered under secure conditions.

### SUMMARY OF THE INVENTION

The present invention proposes a reusable container formed from a plurality of interlocking panels,
*characterised in that* each of the panels includes a communication unit capable of communicating with at least one of the other panels such that the communication units co-operate to form an integrated electronic monitoring system for monitoring the structural integrity of the container.

The container may include a programmable master communication unit with a stored identifier for the individual container and which is arranged to store a destination address for verifying the correct delivery of the container upon arrival at a destination.

By incorporating the identification and delivery information within the container in an electronic form it is possible to verify delivery and secure the container without anyone being present to receive the consignment. The system also allows general data on the movement of goods to be compiled for commercial use. Since the container is formed of interlocking panels they can easily be reused and returned in a flat-packed condition if required. The panels could also be used to construct containers of the required size so that valuable transportation space is not wasted.

The system for monitoring the structural integrity of the container means that any tampering in transit can be detected and signalled on arrival. The system may, for example, incorporate a communication bus which is breached if any of the panels are removed. In a preferred form of the invention each of the panels is provided with an electronic identifier. The identity of the individual panel which has been tampered with can thus be detected. In addition, the movements of each panel can be tracked throughout the life of the panel.

The container preferably includes at least one key panel having a release mechanism which must be operated to gain access to the contents of the container. The communication unit and monitoring system are preferably incorporated into such a key panel.

In a preferred form of the invention a docking station is provided at the destination location which is capable of latching the container by connection with the release mechanism. The docking station is preferably arranged to communicate with the communication unit of the container. The docking station may thus read the identifier and delivery address so that container may only be latched if the correct delivery address is read.

The docking station may further include a modem or other long-distance communication unit allowing the station to send and/or receive data from a remote location, e.g. by land telecommunications, satellite or terrestrial radio communication. The docking station may thus automatically notify the remote location of the correct delivery of the container, and the remote location may, in turn, acknowledge receipt of the delivery information.

The docking station may further include a local communication unit for communicating with a portable data communication unit carried by the person who delivers the container.

### BRIEF DESCRIPTION OF THE DRAWINGS

The following description and the accompanying drawings referred to therein are included by way of non-limiting example in order to illustrate how the invention may be put into practice. In the drawings:
Figure 1 is a plan view, looking from the inside, of a standard panel for use in the construction of a container in accordance with the invention;
Figure 2 is section II-II through one of the connecting heads shown in Fig. 1;
Figure 3 is further section III-III through two of the connecting slots of Fig. 1;
Figure 4 is a plan view, looking from the outside, of a key panel for use in the container;
Figure 5 is section V-V through the key panel shown in Fig. 4;
Figure 6 is a general diagrammatic representation of a destination location, including a container being received at a docking station;
Figure 7 is a block diagram of the data logger incorporated in the docking station;
Figure 8 is a flow diagram showing the steps involved in delivery of the container; and
Figure 9 is a plan view of an alternative form of the panel.

### DETAILED DESCRIPTION OF THE DRAWINGS

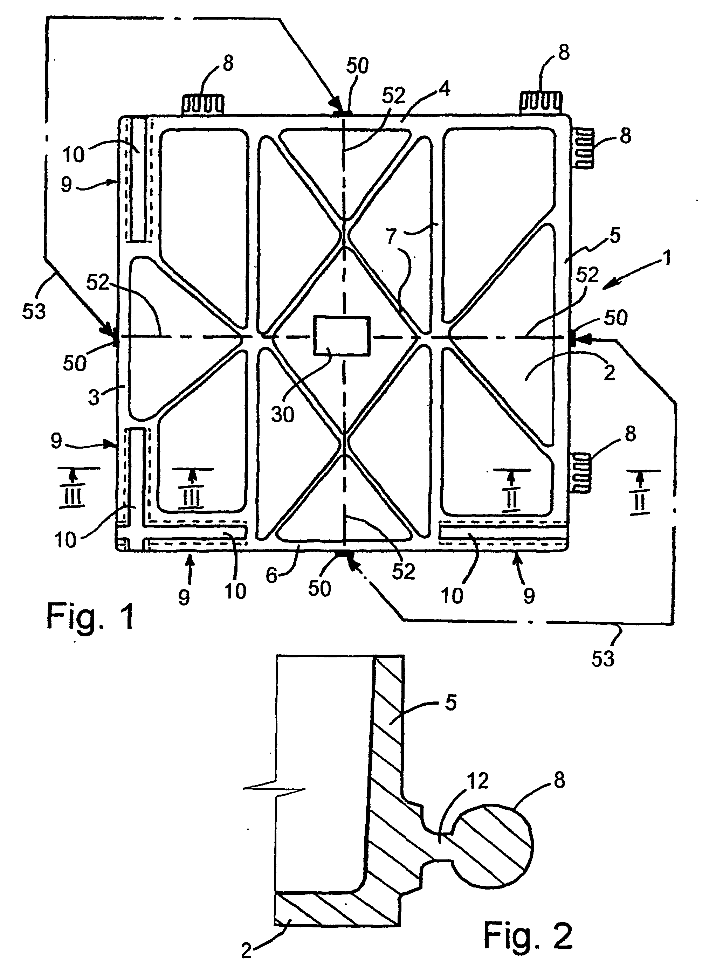

The panel 1 shown in Fig. 1 may be injection moulded of plastic or die cast of lightweight metal for example. The panel has a substantially square external wall 2 which is surrounded by four inwardly projecting side walls 3-6 with an array of strengthening webs 7 joining the walls 2-6. The space between the webs may be filled with foam for heat insulation and to increase the solidity of the panels. Two adjacent side walls 4 and 5 are each provided with a pair of mutually spaced connecting heads 8 while the two remaining side walls 3 and 6 each contain a pair of mutually spaced connecting slots 9. In addition, the walls 3 and 6 are formed with a second pair of inwardly-directed mutually spaced connecting slots 10.

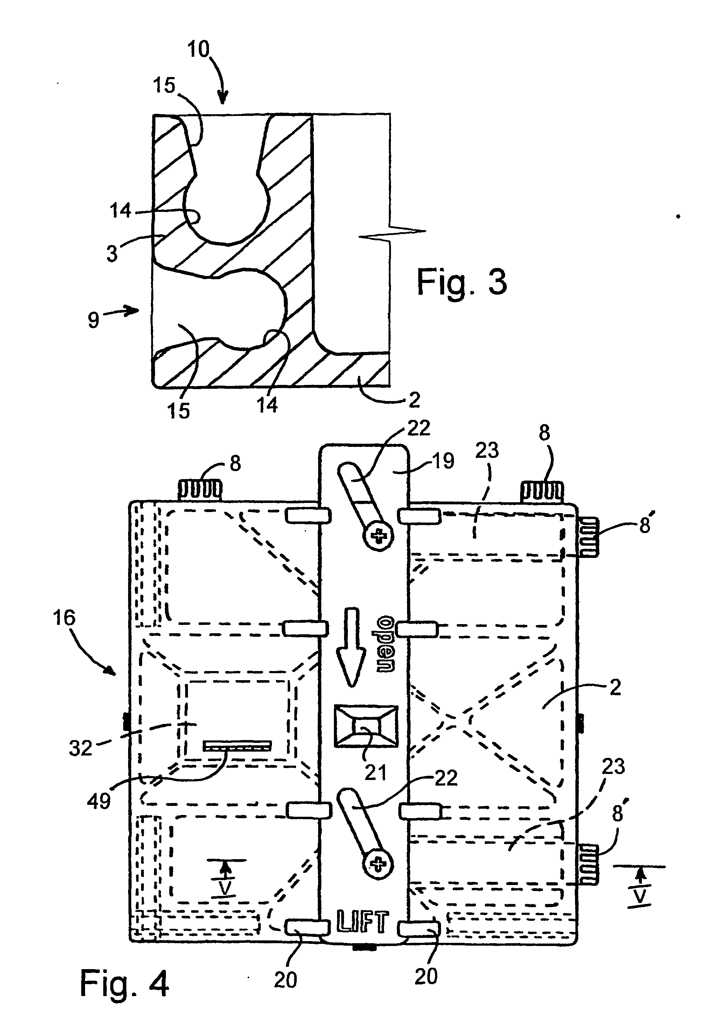

Referring to **Fig. 2,** each of the heads 8 is of cylindrical shape, connected to the respective wall 4, 5 by a neck 12. Furthermore, as can be seen in **Fig.** **3**, the connecting slots 9 and 10 are keyhole-shaped in cross section, having a cylindrical base part 14 with a tapering entry portion 15. It will thus be appreciated that by snap-engaging the heads 8 into the slots 9 of similar panels a number of the panels can be interconnected to form a rectangular side for a container of any desired size. Furthermore, by inserting the heads 8 along one of the container sides into the inward-facing slots 10 of an adjacent side, the side walls can be interconnected to construct a container of the required size.

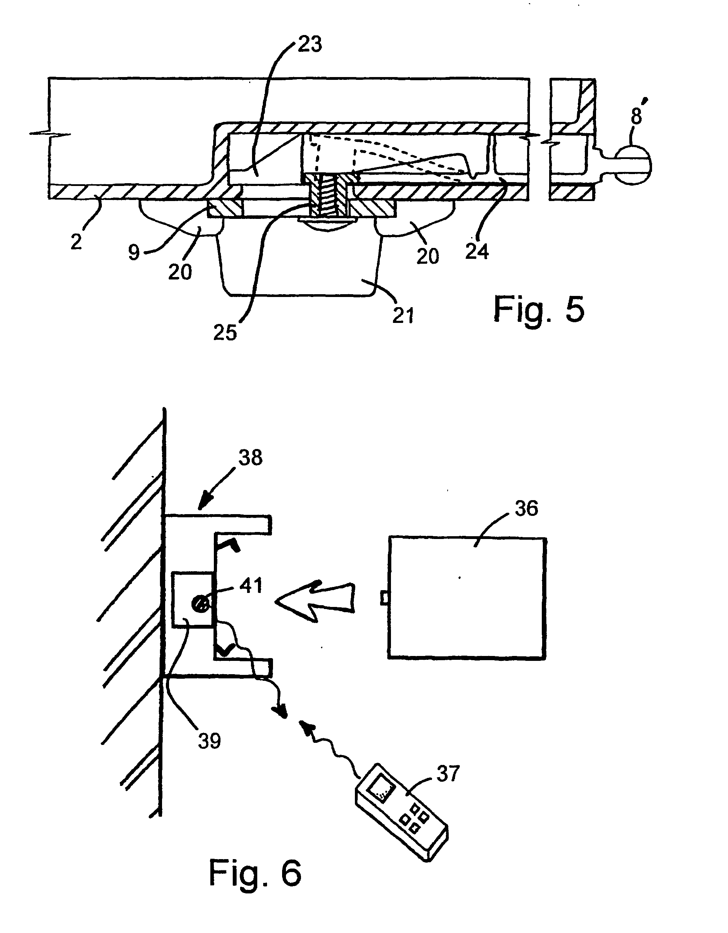

In order to complete the container it is necessary to insert, as the final panel, a key panel 16 which is shown in **Fig.s 4 and 5.** The panel is similar to that of **Fig.s 1 to 3** except that one pair of connecting heads can be retracted to permit insertion and removal of the panel. The retractable heads 8' are operated by a slider 19 which is mounted on the outside wall 2 between pairs of opposed L-shaped guide lugs 20. The slider has an operating handle 21 and a pair of inclined slots 22. The panel further contains a pair of guide channels 23, extending transverse to the slider 9, which receive bolts 24 (see **Fig. 5**) having the heads 8' moulded onto one end. The opposite end of the bolts are formed with a spigot 25 which projects through the inclined slots 22 so that as the slider 19 is moved back and forth the blots are caused to travel along the channels 23 allowing the heads 8' to be retracted.

Returning to **Fig. 1,** each of the panels is provided with an electronic communication unit 30 having an embedded unique identification code for the panel. The key panel (**Fig. 4**) contains a programmable master communication unit 32 having a rewritable memory which is programmed to hold a permanent identifier for the individual container. During assembly of the container the master unit 32 is programmed, via a multi-way electrical connector 49, with the identity codes for the individual panels making up the container. Each of the four side walls of the panels is provided with an electrical contact 50 which is electrically connected to the communication unit 30, 32 via wires 52. When the panels are assembled the contacts 50 engage each other to provide a continuous electrical communication bus 53 encompassing all of the communication units. The bus carries signals from all of the communication units, e.g. using a standard serial communications protocol, so that the mater unit 32 receives the code from all the panels. Any structural breach of the container can thus be detected by interruption of the bus, and furthermore, the location of the breach can be detected by monitoring which codes are no longer received.

The allocation of an embedded code to each panel also allows the movements of the individual panel to be tracked over its lifetime so that, for example, the location of any tampering can be pinpointed.

Prior to despatch of the container and its contents the master communication unit 32 is programmed with the destination address to which the container is to be delivered together with other information which is relevant to the particular consignment. The address information could be in the form of an full postal address or a simple destination code.

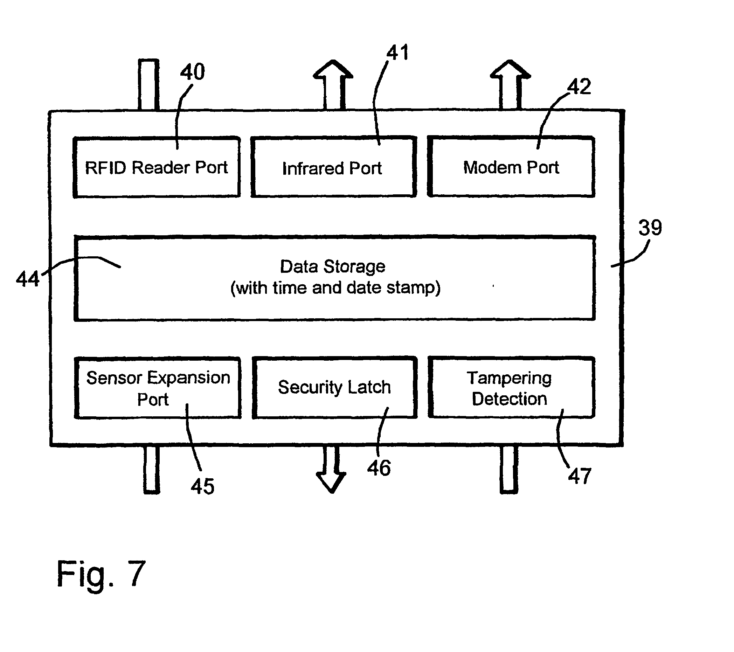

Referring to **Fig. 6**, each destination location is provided with a docking station 38 which is adapted to form a physical interlock with the container 36 by latching on to the release mechanism of the key panel, operated by a solenoid for example. The docking station also includes a microprocessor-based data logger 39, shown in detail in **Fig. 7**, which can exchange information with the master communication unit 32 via connector 49 and a reader port 40. An infrared communication port 41 allows communication with a hand-held portable logging unit 37 (**Fig. 6**) which may be carried by delivery personnel, and a modem 42 allows communication with a central server via the internet or other communication network. Additional features of the data logger include a data storage area 44 including a real time clock enabling the date and time of delivery to be logged, an expansion port 45, a latching mechanism interface 46, and a tampering detector and alarm 47.

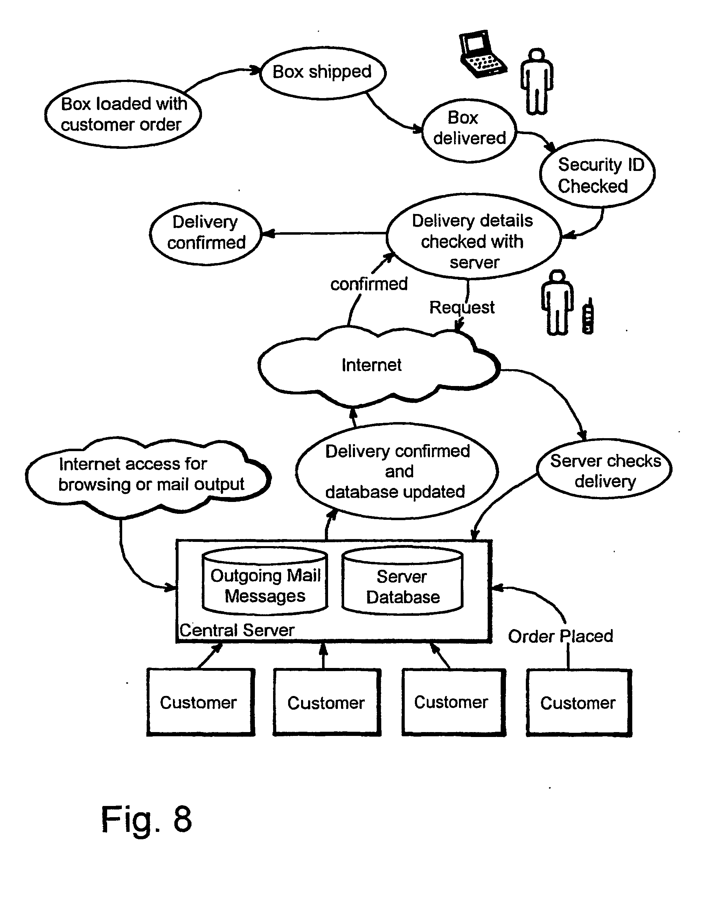

**Fig. 8** shows the various stages in the transportation of a consignment from customer to recipient. The following operational steps may typically be involved:
- The consignment is placed in a container 36 and the communication unit 32 is loaded with the necessary data.
- The container is shipped to the destination location. Any breach in the structural integrity of the container during transit is detected and logged.
- On receipt, the container is loaded into the docking station 38 but is not latched at this stage.
- The delivery person enters their security details into the data logger using their portable logging unit 37.
- The data logger 39 reads the stored data key from the container's communication unit 32.
- The data logger checks the delivery address of the container and, if the container is at the correct location, the docking station latches the container via the interface 46.
- The data logger then contacts the central server using the internal modem 42 and send details of the delivery. If there has been any tampering in transit a warning message is sent to the server.
- When the details of the delivery have been verified by the server from its information database it sends an acknowledgement back to the data logger.
- The server sends a message to the sender or other third party to notify them that delivery has taken place.
- The container can then be released by authorised personnel who are in possession of an appropriate key or security code which enables the docking station to release the container.

It will thus be appreciated that the consignment can be delivered at any time of the day or night under conditions of complete security. The server database can be interrogated to provide valuable data on the type of goods being moved, quantity, time, frequency of movement etc.

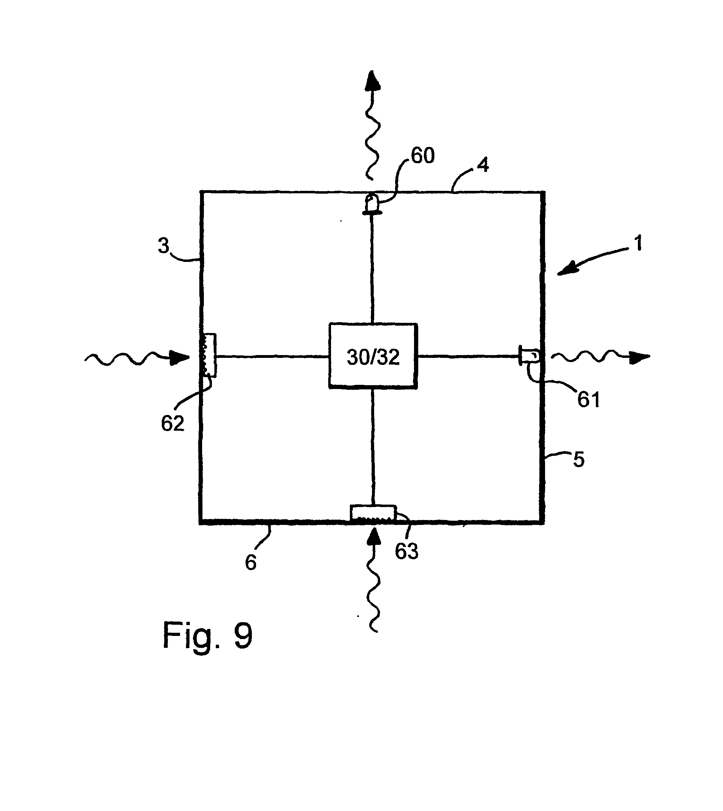

Although a physical wire bus 53 has been described the bus could also be formed by a non-wire link, an example of which is shown in **Fig. 9**. In this instance two adjacent side walls 4 and 5 of the panel 1 are provided with infra-red transmitters 60 and 61 which are connected to the respective communication unit 30 or 32. The other two side walls 3 and 6 are provided with infra-red sensors 62 and 63, so that a continuous communication bus is formed by means of a modulated infra-red link which is capable of transmitting data between the communication units, as described. Similar communication links could be provided using radio frequency or ultrasound signals for example.

## Claims

1. A reusable container formed from a plurality of interlocking panels (1, 16),
***characterised in that*** each of the panels includes a communication unit (30, 32) capable of communicating with at least one of the other panels such that the communication units co-operate to form an integrated electronic monitoring system for monitoring the structural integrity of the container.

2. A reusable container according to Claim 1, in which the communication units communicate by means of non-wire communication links (e.g. light, radio frequency or ultra-sonic waves, 60 - 63).

3. A reusable container according to Claim 1, in which the communication units communicate by means of a physical communication bus (50, 52, 53).

4. A reusable container according to Claim 1, including a programmable master communication unit (32).

5. A reusable container according to Claim 4, in which the master communication unit is connected to an external communication port (49).

6. A reusable container according to Claim 4, in which the master communication unit (32) includes means (44) for storing an identifier for the individual container and a destination address for delivery of the container.

7. A reusable container according to Claim 1, in which each of the panels has an electronic identifier for the individual panel.

8. A reusable container according to Claim 1, including at least one key panel (16) having a release mechanism (19) which must be operated to gain access to the contents of the container.

9. A reusable container according to Claim 8, in which the key panel includes a master communication unit (32).

10. A reusable container according to Claim 1, in which a docking station (38) is provided at a destination location which includes latching means for latching the container.

11. A reusable container according to Claim 1, in which the docking station includes a communication port (40) for communicating with the master communication unit (32).

12. A reusable container according to Claim 11, in which the docking station is arranged to read the identifier and delivery address and latch the container only if the correct delivery address is read.

13. A reusable container according to Claim 10, in which The docking station includes a long-distance communication device (42) for sending and/or receiving data from a remote location.

14. A reusable container according to Claim 10, in which the docking station includes a local communication device (41) for communicating with a portable data communication unit.

## Patentansprüche

1. Wiederverwendbarer Behälter, der aus einer Mehrzahl von ineinandergreifenden Platten gebildet ist,
**dadurch gekennzeichnet, dass** jede der Platten eine Kommunikationseinheit (30, 32) enthält, die zur Kommunikation mit wenigstens einer der anderen Platten in der Lage ist, so dass die Kommunikationseinheiten kooperieren, um ein integriertes elektronisches Überwachungssystem zum Überwachen der strukturellen Unversehrtheit des Behälters zu bilden.

2. Wiederverwendbarer Behälter nach Anspruch 1, bei dem die Kommunikationseinheiten mittels drahtloser Kommunikationsverbindungen (z.B. Licht-, Radiofrequenz- oder Ultraschallwellen 60-63) kommunizieren.

3. Wiederverwendbarer Behälter nach Anspruch 1, bei dem die Kommunikationseinheiten über einen physischen Kommunikationsbus (50, 52, 53) kommunizieren.

4. Wiederverwendbarer Behälter nach Anspruch 1, der eine programmierbare Hauptkommunikationseinheit (32) enthält.

5. Wiederverwendbarer Behälter nach Anspruch 4, bei dem die Hauptkommunikationseinheit mit einem externen Kommunikationsanschluss (49) verbunden ist.

6. Wiederverwenbarer Behälter nach Anspruch 4, bei dem die Hauptkommunikationseinheit (32) eine Einrichtung (44) zum Speichern eines Identifikators für den individuellen Behälter und einer Zieladresse zur Lieferung des Behälters umfasst.

7. Wiederverwendbarer Behälter nach Anspruch 1, bei dem jede der Platten einen elektronischen Identifikator für die individuelle Platte hat.

8. Wiederverwenbarer Behälter nach Anspruch 1, der wenigstens eine Schlüsselplatte (16) mit einem Entriegelungsmechanismus (19) hat, der betätigt werden muss, um Zugang zu dem Inhalt des Behälters zu erhalten.

9. Wiederverwenbarer Behälter nach Anspruch 8, bei dem die Schlüsselplatte eine Hauptkommunikationseinheit (32) aufweist.

10. Wiederverwendbarer Behälter nach Anspruch 1, bei dem eine Andockstation (38) an einem Zielort vorgesehen ist, die eine Einrasteinrichtung zum Einrasten des Behälters aufweist.

11. Wiederverwenbarer Behälter nach Anspruch 1, bei dem die Andockstation einen Kommunikationsanschluss (40) zur Kommunikation mit der Hauptkommunikationseinheit (32) umfasst.

12. Wiederverwenbarer Behälter nach Anspruch 11, bei dem die Andockstation dazu vorbereitet ist, um den Identifikator und die Zieladresse auszulesen und den Behälter nur einrasten zu lassen, wenn die korrekte Zieladresse eingelesen wird.

13. Wiederverwendbarer Behälter nach Anspruch 10, bei dem die Andockstation eine langreichweitige Kommunikationseinrichtung (42) zum Senden und/oder Empfangen von Daten von einem entfernten Ort aufweist.

14. Wiederverwendbarer Behälter nach Anspruch 10, bei dem die Andockstation eine lokale Kommunikationseinrichtung (41) zur Kommunikation mit einer tragbaren Datenkommunikationseinheit aufweist.

## Revendications

1. Conteneur réutilisable formé à partir d'une pluralité de panneaux à emboîtement (1, 16),
***caractérisé par le fait que*** chacun des panneaux comprend une unité de communication (30, 32) capable de communiquer avec au moins l'un des autres panneaux de telle sorte que les unités de communication coopèrent pour former un système de surveillance électronique intégré pour surveiller l'intégrité structurale du conteneur.

2. Conteneur réutilisable selon la revendication 1, dans lequel les unités de communication communiquent au moyen de liaisons de communication sans fil (par exemple, lumière, radiofréquence ou ondes ultrasonores, 60-63).

3. Conteneur réutilisable selon la revendication 1, dans lequel les unités de communication communiquent au moyen d'un bus de communication physique (50, 52, 53).

4. Conteneur réutilisable selon la revendication 1, comprenant une unité de communication maître programmable (32).

5. Conteneur réutilisable selon la revendication 4, dans lequel l'unité de communication maître est connectée à un port de communication externe (49).

6. Conteneur réutilisable selon la revendication 4, dans lequel l'unité de communication maître (32) comprend un moyen (44) pour stocker un identificateur pour le conteneur individuel et une adresse de destination pour la distribution du conteneur.

7. Conteneur réutilisable selon la revendication 1, dans lequel chacun des panneaux a un identificateur électronique pour le panneau individuel.

8. Conteneur réutilisable selon la revendication 1, comprenant au moins un panneau clé (16) ayant un mécanisme de libération (19) qui doit être actionné pour avoir accès au contenu du conteneur.

9. Conteneur réutilisable selon la revendication 8, dans lequel le panneau clé comprend une unité de communication maître (32).

10. Conteneur réutilisable selon la revendication 1, dans lequel une station d'amarrage (38) est disposée à un emplacement de destination qui comprend un moyen de verrouillage pour verrouiller le conteneur.

11. Conteneur réutilisable selon la revendication 1, dans lequel la station d'ammarrage comprend un port de communication (40) pour communiquer avec l'unité de communication maître (32).

12. Conteneur réutilisable selon la revendication 11, dans lequel la station d'ammarrage est disposée pour lire l'identificateur et l'adresse de distribution et verrouiller le conteneur seulement si l'adresse de distribution correcte est lue.

13. Conteneur réutilisable selon la revendication 10, dans lequel la station d'ammarrage comprend un dispositif de communication à longue distance (42) pour envoyer et/ou recevoir des données à partir d'un emplacement éloigné.

14. Conteneur réutilisable selon la revendication 10, dans lequel la station d'ammarrage comprend un dispositif de communication local (41) pour communiquer avec une unité de communication de données portable.
